(19) Europäisches Patentamt
European Patent Office
Office européen des brevets

(11) **EP 3 357 587 B1**

(12) **EUROPÄISCHE PATENTSCHRIFT**

(45) Veröffentlichungstag und Bekanntmachung des Hinweises auf die Patenterteilung:
**11.09.2019   Patentblatt 2019/37**

(51) Int Cl.:
*B05D 5/08* (2006.01)       *C09D 127/18* (2006.01)
*C08L 27/18* (2006.01)      *B05D 7/00* (2006.01)

(21) Anmeldenummer: **17155014.8**

(22) Anmeldetag: **07.02.2017**

(54) **ANTIHAFTBESCHICHTUNG**

NON-STICK COATING

REVÊTEMENT ANTIADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.08.2018   Patentblatt 2018/32**

(73) Patentinhaber: **Industrielack AG**
**8855 Wangen SZ (CH)**

(72) Erfinder:
• **BRAND, Jörg**
**8855 Wangen SZ (CH)**

• **GEISEL, Hans Georg**
**8855 Wangen SZ (CH)**

(74) Vertreter: **Schmauder & Partner AG**
**Patent- & Markenanwälte VSP**
**Zwängiweg 7**
**8038 Zürich (CH)**

(56) Entgegenhaltungen:
**EP-A1- 0 525 660     EP-A1- 0 889 928**
**EP-A1- 1 614 731**

**Beschreibung**

Technisches Gebiet

Die vorliegende Erfindung betrifft eine PTFE-Antihaftbeschichtung mit verbesserten Antihaft-Eigenschaften nach intensivem Abrieb, einen Gegenstand mit einer derartigen Antihaft-Beschichtung , ein Verfahren zu deren Herstellung sowie deren Verwendung bei der Herstellung von Koch-, Brat- und Küchengeräten oder anderen Anwendungen, bei denen ein Antihaft-Effekt und hohe Abriebbeständigkeit gefordert sind.

Stand der Technik

Organische Fluorpolymerbeschichtungen zeigen aufgrund ihrer geringen Oberflächenenergie sehr gute Antihaft-Eigenschaften und aufgrund der hohen C-F Bindungsenergien hohe Temperaturbeständigkeiten. Insbesondere als Antihaft-Beschichtungen für Küchengeräte finden solche Beschichtungen breite Anwendung.

Antihaft-Beschichtungen aus Fluorpolymeren werden meist in mehreren Schichten auf das Substrat aufgetragen. Mehrschichtige Fluorpolymerbeschichtungen umfassen generell eine Haftvermittler-Schicht und eine Deckschicht, und optional eine oder mehrere Mittelschichten.

Mehrlagige Antihaft-Beschichtungen aus Fluorpolymeren sind seit vielen Jahren bekannt. Die Haftvermittler-Schicht solcher Systeme besteht typischerweise aus einem oder mehreren hitzebeständigen organischen Bindeharzen und einem oder mehreren Fluorpolymeren zusammen mit verschiedenen Pigmenten und Füllstoffen. Die Mittelschicht beinhaltet hauptsächlich Fluorpolymere, geringe Anteile an Effektpigmenten, Pigmenten, Füllstoffen und Filmbildehilfsmitteln, wohingegen die Deckschicht fast ausschliesslich aus Fluorpolymeren, insbesondere aus hochmolekularem PTFE, welches durch Emulsionspolymerisation von TFE aus wässriger Dispersion gewonnen wurde, alleine oder aus hochmolekularem PTFE , welches durch Emulsionspolymerisation von TFE aus wässriger Dispersion gewonnen wurde, mit geringen Anteilen an schmelzverarbeitbarem Fluorpolymer, besteht, um möglichst gute Antihaft-Eigenschaften der Deckschicht zu gewährleisten.

Zur Verbesserung der Abriebfestigkeit mehrschichtiger PTFE-Antihaftbeschichtungen werden meist harte anorganische Füllstoffe verwendet.

So beschreibt z.B. US 5,250,356 ein mehrschichtiges System, umfassend eine durch feinteiliges Aluminiumoxid verstärkte Haftvermittler-Schicht bestehend aus PTFE, PFA und PAI, einer Zwischenschicht bestehend aus PTFE, PFA und feinteiligem Aluminiumoxid sowie einer Deckschicht aus reinem PTFE.

EP 1016466 beschreibt eine mehrschichtige keramisch verstärkte Antihaftbeschichtung, bei der die Basisschicht keramische Partikel enthält, die aber so gross sind, dass sie aus der Deckschicht herausragen und dadurch die abrasive Belastung von der Deckschicht fernhalten.

US 6,761,964 beschreibt eine mehrschichtige Antihaftbeschichtung umfassend eine Basisschicht aus Fluorpolymeren, Haftvermittler-Polymeren und grossen anorganischen Hartstoffpartikeln, die in der Basisschicht verankert sind und in die darauf folgende Zwischenschicht hineinragen, welche aus Fluorpolymeren und kleineren keramischen Füllstoffpartikeln besteht, und einer Deckschicht, die ausschliesslich aus Fluorpolymeren besteht.

EP 2001949 beschreibt eine dreischichtige Antihaftbeschichtung in der die Basisschicht und die Deckschicht frei von keramischen Partikeln >10 $\mu$m sind und die Mittelschicht mindestens 3Gew% keramische Partikel >10 $\mu$m und Fluorpolymere enthält.

Werden solche Systeme abgerieben, so zeigen diese Systeme auf den abgeriebenen Oberflächen meist schlechte Antihaft-Eigenschaften, da die Füllstofffreien Deckschichten aufgrund der niedrigen Deckschicht-Trockenfilmschichtdicken schnell abgerieben werden und somit die mit Füllstoffen versetzten Mittelschichten freigelegt werden, die schlechtere Antihaft-Eigenschaften zeigen, als die meist ausschliesslich aus Fluorpolymeren bestehenden Deckschichten.

EP 2342279 beschreibt eine Fluorpolymer-Beschichtungszusammensetzung mit verbesserter Abriebbeständigkeit, die auf eine mit Aluminiumoxid verstärkten Haftvermittler-Schicht oder zumindest eine Mittelschicht aufgebracht wird. Die beschriebene ungefüllte Deckschicht besteht aus Acrylaten (Filmbildehilfsmitteln), Cer-Ethylhexanoat (Katalysator für die Verbrennung des Filmbildehilfsmittels) und einer Fluorpolymer-Zusammmensetzung.

Die Fluorpolymerzusammensetzung besteht hierbei aus 30-96%Gew hochmolekularem PTFE (bezogen auf den gesamten festen Gehalt an Fluorpolymeren der Beschichtung) in Form einer wässrigen Dispersion mit einem zahlengemittelten Molekulargewicht (Mn) von mindestens 500'000, wobei das hochmolekulare PTFE ein modifizierendes Co-Monomer in einem Gehalt von weniger als 1% beinhaltet und die Fluorpolymerzusammensetzung ferner niedermolekulares PTFE in Form einer wässrigen Dispersion in einem Gehalt von 4-70%Gew (bezogen auf den gesamten festen Gehalt an Fluorpolymeren der Beschichtung) mit einem ersten Schmelzpunkt von 335 °C oder weniger und ein schmelzverarbeitbares Fluorpolymer in Form wässriger Dispersion enthält. Das offenbarte hochmolekulare PTFE und das erwähnte niedermolekulare PTFE werden hierbei durch Emulsionspolymerisation von TFE erhalten.

Die verbesserten Abriebwerte dieser Beschichtung werden auf das Vorhandensein von niedermolekularem PTFE und schmelzverarbeitbarem Fluorpolymer (z.B. PFA) zurückgeführt.

Für die Basisschicht wurden Schichtstärken um 8 μm und für die Deckschicht wurden Schichtstärken um 25 μm offenbart.

WO 2012/092414 beschreibt wässrige Dispersionen von nicht-schmelzverarbeitbaren Fluorpolymeren und Beschichtungen aus diesen Dispersionen. Die aus den beschriebenen PTFE-Dispersionen hergestellten Beschichtungen zeigen durch erhöhten Gehalt an nicht-ionischem Netzmittel und 1-10%Gew wasserlösliche Erdalkalimetallen oder 0.1-1% kolloidales Silica eine erhöhte kritische Schichtdicke bevor es zur Bildung von Rissen in der Schicht kommt (CCT; critical cracking thickness).

Weitere Antihaftbeschichtungen gemäß dem Oberbegriff des Anspruchs 1 sind aus der EP 0 525 660 A1 und der EP 1 614 731 A1 bekannt.

Mehrschichtige Antihaftbeschichtungen besitzen meist Gesamt-Trockenfilmschichtstärken von maximal 45 μm (Haftvermittlerschicht: 14-18 μm, Mittelschicht 12-14 μm, Deckschicht 10-13 μm). Ungefüllte wässrige PTFE-Beschichtungszusammensetzungen (der Deckschicht) zeigen meist kritische Trockenfilm-Schichtdicken von ca. 12-14 μm bevor sich Risse bilden.

Eine verbesserte Abriebbeständigkeit kann u.a. dadurch erreicht werden, dass die Trockenfilmschichtdicke der Mittelschicht und der Deckschicht erhöht wird. Ohne Zusatz von Füllstoffen bilden sich jedoch bei hohen Schichtstärken Risse nach dem Einbrennen der Beschichtung.

Die Bildung von Rissen bei hohen Mittel- und Deckschicht-Trockenfilmschichtdicken lassen sich durch den Zusatz von Füllstoffen minimieren bzw. es können höhere kritische Trockenfilm-Schichtdicken erzielt werden. Die zugesetzten Füllstoffe zeigen jedoch einen negativen Einfluss auf die Antihaft-Eigenschaften der abgeriebenen Beschichtung.

Der Zusatz von Filmbildehilfsmitteln wie Acrylaten kann die kritische Trockenfilmschichtstärke ebenfalls etwas erhöhen, jedoch verbrennen die zugesetzten Acrylate beim Einbrennvorgang der Beschichtung und es müssen Katalysatoren zugesetzt werden um eine möglichst vollständige Verbrennung der Acrylate zu erreichen. Unverbrannte Acrylatrückstände beeinflussen die Antihaft-Eigenschaften ebenfalls negativ.

Darstellung der Erfindung

Eine Aufgabe der Erfindung ist es demnach, eine verbesserte Antihaftbeschichtung bereitzustellen. Eine weitere Aufgabe der Erfindung besteht darin, ein Verfahren zum Aufbringen der erfindungsgemässen Antihaftbeschichtung anzugeben. Gelöst werden diese Aufgaben durch die im Anspruch 1 definierte Antihaftbeschichtung bzw. durch das im Anspruch 12 definierte Verfahren.

Die erfindungsgemässe Antihaftbeschichtung umfasst zumindest eine auf eine Oberfläche des Artikels angebrachte Haftvermittlerschicht und eine über der Haftvermittlerschicht angeordneten Deckschicht, wobei die Haftvermittlerschicht eine Trockenfilmschichtdicke von 5 bis 25 μm aufweist und wobei die Deckschicht eine Trockenfilmschichtdicke von 20 bis 45 μm aufweist. Die Deckschicht enthält 98 bis 100 Gew.-% PTFE und gegebenenfalls bis zu 2 Gew.-% Pigmente bezogen auf den gesamten Feststoffgehalt der Deckschicht und ist frei von schmelzverarbeitbaren Fluorpolymeren, wobei sie neben hochmolekularem PTFE, das durch Emulsionspolymerisation von TFE gewonnen wurde, 1 bis 9 Gew.-% eines hochmolekularen modifizierten PTFE, welches < 1 Gew.-% Perfluorpropylvinylether (PPVE) als modifizierendes Co-Monomer enthält und durch Suspensionspolymerisation gewonnen wurde, enthält.

Die Herstellung von modifziertem PTFE mittels Suspensionspolymerisation ist grundsätzlich bekannt und wird insbesondere zur Bildung von körnigem PTFE mit besonders hohem Molekulargewicht eingesetzt.

Durch die hohen rissfreien Deckschicht-Trockenfilmschichtstärken lassen sich gegenüber dem Stand der Technik deutlich bessere Abriebfestigkeiten erzielen und die Antihaft-Eigenschaften der abgeriebenen Schicht sind deutlich langlebiger, da in der Deckschicht neben PTFE keine Füllstoffe enthalten sind, die nach dem Abrieb der Deckschicht freigelegt werden können und somit die Antihafteigenschaften verschlechtern würden. Dementsprechend zeichnet sich die erfindungsgemässe Antihaftbeschichtung durch einen guten Antihaft-Effekt in Kombination mit einer guten Abriebbeständigkeit aus.

Beim erfindungsgemässen Verfahren wird die zu bildende Haftvermittlerschicht in flüssiger Form als wässrige Dispersion auf die Oberfläche des Gegenstandes aufgebracht und anschliessend für 5 bis 15 Minuten bei 60 bis 110 °C getrocknet. Danach wird die Deckschicht in Form einer wässrigen Dispersion auf die vorgetrocknete Haftvermittlerschicht aufgebracht und anschliessend werden die Schichten durch Trocknung und Versinterung bzw. Aufschmelzen bei 410 bis 430 °C miteinander und mit der Oberfläche des Gegenstandes verbunden.

Überraschenderweise hat sich gezeigt, dass sich mit dem erfindungsgemässen Verfahren selbst hohe Deckschicht-Trockenfilmschichtstärken von bis zu 45 μm rissfrei in einem einzigen Beschichtungsvorgang erhalten lassen.

Ein weiterer Aspekt der Erfindung betrifft gemäss Anspruch 10 die Verwendung der erfindungsgemässen Antihaftbeschichtung für Oberflächenanwendungen, bei denen hohe Abriebfestigkeiten und gute Antihafteigenschaften gefordert werden.

Noch ein weiterer Aspekt der Erfindung betrifft gemäss Anspruch 11 einen Artikel, insbesondere ein Kochgeschirr oder anderer Haushalts- und Gebrauchsgegenstand, mit einer Oberfläche, die mit einer erfindungsgemässen Antihaftbeschichtung versehen ist.

Die erfindungsgemässe Antihaftbeschichtung weist demnach eine Schichtenfolge "Gegenstand-Haftvermittlerschicht-Deckschicht" auf. Optional kann zwischen der Haftvermittlerschicht und der Deckschicht eine Zwischenschicht aufgetragen werden.

Vorteilhafte Ausgestaltungen der Erfindung sind nachfolgend beschrieben und in den abhängigen Ansprüchen definiert.

Gemäss einer bevorzugten Ausgestaltung (Anspruch 2) weist die Deckschicht eine Trockenfilmschichtdicke von 30 bis 42 $\mu$m auf.

Gemäss einer weiteren vorteilhaften Ausgestaltung (Anspruch 3) beträgt der Gehalt von PTFE in der Deckschicht 99 bis 99.5 Gew.-%. Der Gehalt an Pigmenten beträgt dementsprechend 1 bis 0.5 Gew.-% und setzt sich beispielsweise aus ungefähr 2 Teilen Effektpigmenten (Glimmer) und und ungefähr 1 Teil Russpigment zusammen.

Weiterhin ist es bevorzugt (Anspruch 4), dass der Anteil des hochmolekularen modifizierten PTFE in der Deckschicht 4 bis 6 Gew.-%, insbesondere ungefähr 5 Gew.-% des gesamten PTFE in der Deckschicht ausmacht.

Vorteilhaft ist es überdies (Anspruch 5), dass das hochmolekulare modifizierte PTFE eine mittlere Teilchengrösse von 15 bis 35 $\mu$m, insbesondere ungefähr 25 $\mu$m besitzt. Bei sphärischen Teilchen entspricht die Teilchengrösse logischerweise dem Teilchendurchmesser. Bei nicht sphärischen Teilchen wird im vorliegenden Zusammenhang als Teilchengrösse der grösste Durchmesser des Teilchens verstanden.

Gemäss einer vorteilhaften Ausgestaltung (Anspruch 6) ist die Deckschicht frei von Acrylaten. Unverbrannte Acrylatrückstände beeinflussen die Antihaft-Eigenschaften negativ und sind demnach unerwünscht.

Die Beschaffenheit geeigneter Haftvermittlerschichten ist an sich bekannt. Im vorliegenden Zusammenhang hat es sich als vorteilhaft erwiesen (Anspruch 7), dass die Haftvermittlerschicht im Wesentlichen aus hochtemperaturbeständigen Bindeharzen, Fluorpolymeren, Pigmenten und Füllstoffen besteht.

Grundsätzlich können die Bindeharze aus einer ganzen Reihe von bekannten Substanzen wie insbesondere PES (Polyethersulfone), PAI (Polyamidimide), PEK (Polyetherketon), PEEK (Polyetheretherketon), PPS (Polyphenylensulfide), PI (Polyimide), LCP (liquid crystal polymers) und Silikonharze oder Mischungen davon ausgewählt werden. Gemäss einer vorteilhaften Ausgestaltung (Anspruch 8) sind die Bindeharze aus der aus PES und PAI bestehenden Gruppe ausgewählt.

Bevorzugt ist es überdies (Anspruch 9), dass die Haftvermittlerschicht eine Trockenfilmschichtdicke von 10 bis 12 $\mu$m aufweist.

Kurze Beschreibung der Figuren

Ausführungsbeispiele der Erfindung werden nachfolgend anhand der Zeichnungen näher beschrieben, dabei zeigen:

Fig. 1        einen Schichtaufbau einer erfindungsgemässen Antihaftbeschichtung, als schematische Schnittdarstellung;

Fig. 2 - 5    ein Ausführungsbeispiel, jeweils nach einer bestimmten Abriebzeit (links) sowie nach zusätzlichem Milchtest und anschliessender Reinigung (rechts), nämlich: Abriebzeit 45 min (Fig. 2), 90 min (Fig. 3), 180 min (Fig. 4) und 270 min (Fig. 5);

Fig. 6 - 8    ein Vergleichsbeispiel, jeweils nach einer bestimmten Abriebzeit (links) sowie nach zusätzlichem Milchtest und anschliessender Reinigung (rechts), nämlich: Abriebzeit 45 min (Fig. 6), 90 min (Fig. 7) und 135 min (Fig. 8).

Wege zur Ausführung der Erfindung

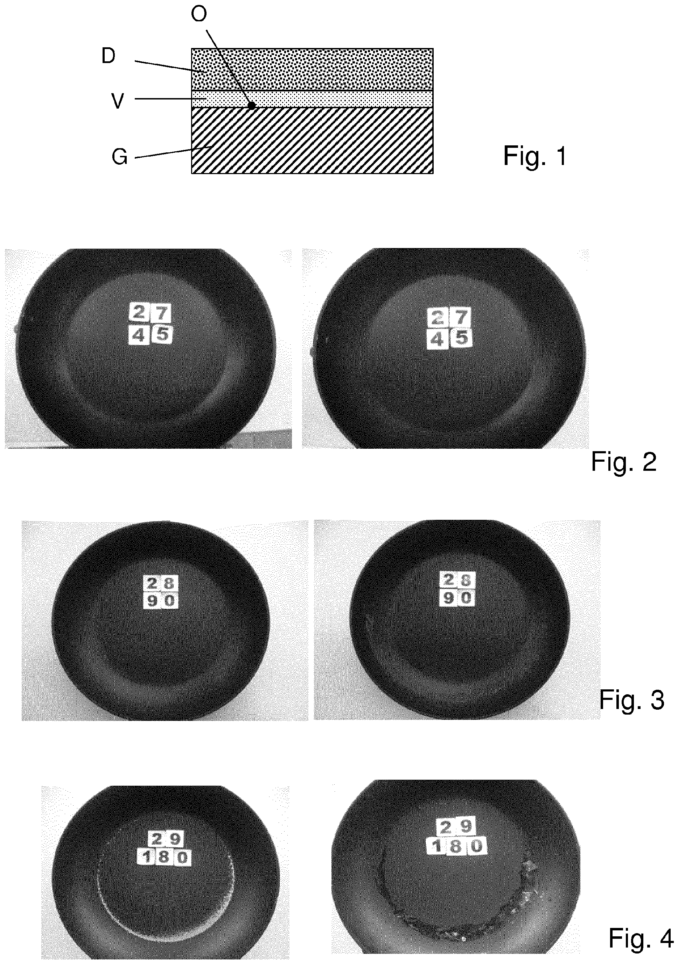

Die in der Figur 1 dargestellte Antihaftbeschichtung für einen Artikel G, bei dem es sich beispielsweise um ein Kochgeschirr, insbesondere um eine Bratpfanne handelt, weist eine auf einer Oberfläche O des Artikels angebrachte Haftvermittlerschicht V sowie eine über der Haftvermittlerschicht angeordnete Deckschicht D auf.

*Beispiel*

Geprüft wurde eine Antihaftbeschichtung bestehend aus einer Deckschicht mit einer Trockenfilmschichtstärke von 30 bis 40 $\mu$m und einer Basisschicht mit einer Trockenfilmschichtstärke von 10 bis 12 $\mu$m. Die Deckschicht enthält

in diesem Ausführungsbeispiel ca. 99.4%Gew PTFE bezogen auf den gesamten Feststoffgehalt der Deckschicht, davon sind ca. 5%Gew hochmolekulares modifiziertes PTFE, welches < 1 Gew.-% Perfluorpropylvinylether (PPVE) als modifizierendes Co-Monomer enthält und durch Suspensionspolymerisation gewonnen wurde und eine mittlere Teilchengrösse von ca. 25 μm hat. Zusätzlich sind ca. 0.4%Gew Effektpigmente (Glimmer) und ca. 0.2%Gew Russpigment bezogen auf den gesamten Feststoffgehalt der Deckschicht enthalten.

Die Haftvermittlerschicht besteht im Ausführungsbeispiel aus ca. 32.5%Gew Aluminiumoxid, 18.4%Gew Polyamidimid, 13.7%Gew Siliciumcarbid, 27.1%Gew PTFE, 5.5%Gew PFA, 1.9%Gew kolloidalem Siliciumdioxid und 0.9%Gew Russpigment bezogen auf den gesamten Feststoffgehalt der Haftvermittlerschicht. Die Haftvermittlerschicht wird aus wässriger Dispersion auf ein sandgestrahltes Substrat (z.B. eine Bratpfanne) aufgebracht und anschliessend während 5 Min bei 80 °C vorgetrocknet. Danach wird die Deckschicht aus wässriger Dispersion auf die vorgetrocknete Haftvermittlerschicht aufgebracht und während 10 min bei 420 °C eingebrannt.

*Eigenschaften der Beschichtung:*

Die eingebrannte erfindungsgemässe Deckschicht wurde mit 40-facher Vergrösserung mit einem Stereomikroskop auf Risse hin untersucht. Dabei konnte verifiziert werden, dass die Deckschicht rissfrei war.

Die Abriebbeständigkeit des beschichteten Gegenstandes wurde wie folgt geprüft:

Die beschichtete Pfanne wird mit einer Mischung bestehend aus Edelstahlkugeln ø 4 mm, Korund (ALODUR EK- P20) und Wasser befüllt und auf einem Kreisschüttler KS 501 digital (Schüttelhub: 30 mm) befestigt und eine bestimmte Zeit bei 300 Umdrehungen/Minute geschüttelt. Die verwendeten Mengen an Edelstahlkugeln, Korund und Wasser berechnen sich wie folgt:

Der Durchmesser des Pfannenbodens innen wird ausgemessen und der ermittelte Wert in cm mit dem Faktor 0.394 multipliziert. Als Ergebnis erhält man den Pfannenbodendurchmesser innen in Zoll.

$$f = (\text{Pfannenbodendurchmesser innen Zoll})^2/10$$

Mit Hilfe des Faktors *f* wird eine entsprechende Menge an Edelstahlkugeln, Korund und Wasser berechnet:

| | |
|---|---|
| Edelstahlkugeln ø 4 mm | 175 Gramm · f |
| ALODUR EK- P20 | 18 Gramm · f |
| Wasser | 20 Gramm · f |

Nach einer bestimmten Schüttelzeit wird die Pfanne optisch dahingehend beurteilt, ob das Aluminiumsubstrat zu sehen ist. Anschliessend die abgeriebene Pfanne auf 200 ± 5 °C erhitzt und ein Pfannkuchen bestehend aus 400 g Milch (3.0% - 4.0% Fett), 200 g Weizenmehl, 150 g Eier, 4 g Salz gebacken und beurteilt, wie sich der gebackene Pfannkuchen aus der Pfannne entfernen lässt.

Um die Antihaft-Eigenschaften weiter zu überprüfen wurde anschliessend Milch eingebrannt, bis diese eine braunschwarze Farbe zeigt und zu rauchen beginnt. Die eingebrannte Milch wurde dann mit Hilfe eines Wasserstrahls aus der Pfanne entfernt und beurteilt, ob Rückstände der eingebrannten Milch in der Pfanne verbleiben. Die Ergebnisse wurden für verschiedene Abriebzeiten fotografisch festgehalten.

Die Figuren 2 bis 5 zeigen die erhaltenen Ergebnisse des mit der erfindungsgemässen Antihaftbeschichtung versehenen Gegenstandes.

Tabelle 1 zeigt die Ergebnisse des Pfannkuchentests des erfindungsgemässen Gegenstandes nach Abrieb und des Vergleichsbeispiels nach Abrieb.

*Vergleichsbeispiel*

Das Vergleichsbeispiel ist eine dreischichtige Antihaftbeschichtung, bei der die Haftvermittlerschicht eine Trockenfilmschichtstärke von ca. 18 μm aufweist, die Zwischenschicht eine Trockenfilmschichtstärke von ca. 15 μm aufweist und die Deckschicht eine Schichtstärke von ca. 12 μm aufweist.

Die Haftvermittlerschicht des Vergleichsbeispiels besteht aus ca. 29.9%Gew Aluminiumoxid, 24.5%Gew Polyamidimid, 12.7%Gew Siliciumcarbid, 25.2%Gew PTFE, 5.1% Gew PFA, 1.8%Gew kolloidalem Siliciumdioxid und 0.8%Gew Russpigment bezogen auf den gesamten Feststoffgehalt der Haftvermittlerschicht.

Die Zwischenschicht des Vergleichsbeispiels besteht aus ca. 5.2%Gew Acrylat, 0.1 %Gew Cer-Ethylhexanoat, 2.0%Gew Aluminiumoxid, 12.3%Gew Siliciumcarbid, 76.7%Gew PTFE, 1.4%Gew PFA, 1.9%Gew Effektpigment (Glimmer) und 0.4%Gew Russpigment bezogen auf den gesamten Feststoffgehalt der Zwischenschicht.

Die Deckschicht des Vergleichsbeispiels besteht aus ca. 3.9%Gew Acrylat, 0.1%Gew Cer-Ethylhexanoat, 2.2%Gew Aluminiumoxid, 91.4%Gew PTFE, 2.2%Gew Effektpigment (Glimmer) und 0.2%Gew Russpigment bezogen auf den gesamten Feststoffgehalt der Deckschicht.

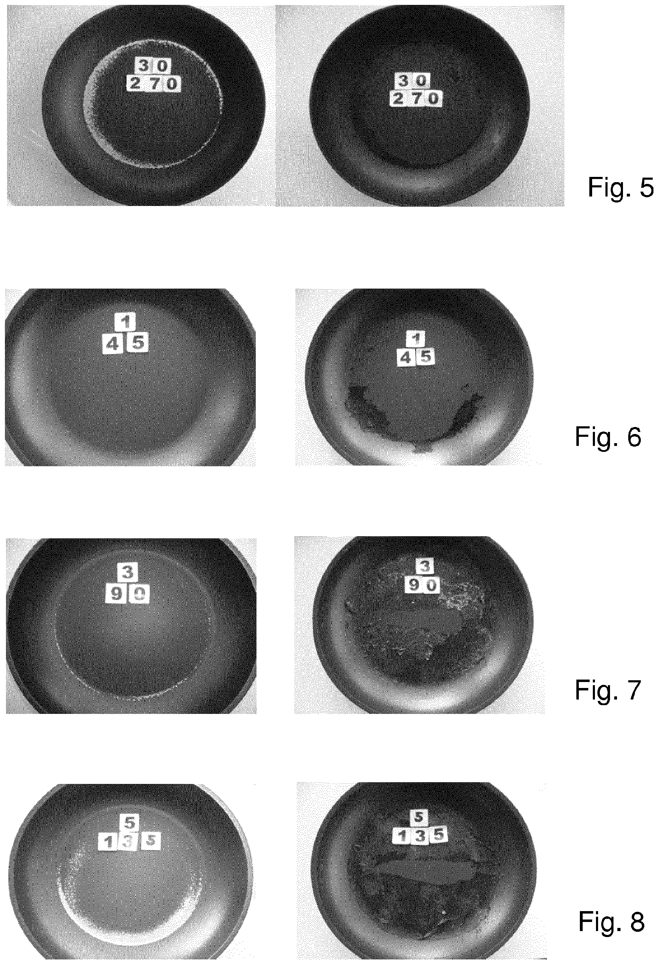

Die Figuren 6 bis 8 zeigen die Prüfungsergebnisse des Vergleichsbeispiels.

**Tabelle 1:** Ergebnisse des Pfannkuchentests des erfindungsgemässen Beispiels und des Vergleichsbeispiels, jeweils nach Abrieb.

| Abriebzeit | Erfindungsgemässes Beispiel | Vergleichsbeispiel |
|---|---|---|
| 45 Minuten | Pfannkuchen fällt nach Umdrehen der Pfanne heraus | Pfannkuchen fällt nach Umdrehen der Pfanne heraus |
| 90 Minuten | Pfannkuchen fällt nach Umdrehen der Pfanne heraus | Pfannkuchen fällt nach Umdrehen der Pfanne und klopfen heraus |
| 135 Minuten | nicht durchgeführt | Pfannkuchen fällt nach Umdrehen der Pfanne und Klopfen heraus |
| 180 Minuten | Pfannkuchen fällt nach Umdrehen der Pfanne heraus | nicht durchgeführt |
| 270 Minuten | Pfannkuchen lässt sich mit einem Holzspatel vollständig ablösen | nicht durchgeführt |

## Patentansprüche

1. Antihaftbeschichtung für einen Artikel, wobei die Antihaftbeschichtung zumindest eine auf eine Oberfläche des Artikels angebrachte Haftvermittlerschicht (V) und eine über der Haftvermittlerschicht angeordneten Deckschicht (D) aufweist, wobei die Haftvermittlerschicht eine Trockenfilmschichtdicke von 5 bis 25 $\mu$m aufweist, und wobei die Deckschicht eine Trockenfilmschichtdicke von 20 bis 45 $\mu$m aufweist, **dadurch gekennzeichnet, dass** die Deckschicht 98 bis 100 Gew.-% PTFE und gegebenenfalls bis zu 2 Gew.-% Pigmente bezogen auf den gesamten Feststoffgehalt der Deckschicht enthält und frei von schmelzverarbeitbaren Fluorpolymeren ist, und dass sie neben hochmolekularem PTFE, das durch Emulsionspolymerisation von TFE gewonnen wurde, 1 bis 9 Gew.-% eines hochmolekularen modifizierten PTFE, welches < 1 Gew.-% Perfluorpropylvinylether (PPVE) als modifizierendes Co-Monomer enthält und durch Suspensionspolymerisation gewonnen wurde, enthält.

2. Antihaftbeschichtung nach Anspruch 1, **dadurch gekennzeichnet, dass** die Deckschicht eine Trockenfilmschichtdicke von 30 bis 42 $\mu$m aufweist.

3. Antihaftbeschichtung nach Anspruch 1 oder 2, **dadurch gekennzeichnet, dass** der Gehalt von PTFE in der Deckschicht 99 bis 99.5 Gew.-% beträgt.

4. Antihaftbeschichtung nach einem der Ansprüche 1 bis 3, **dadurch gekennzeichnet, dass** der Anteil des hochmolekularen modifizierten PTFE in der Deckschicht 4 bis 6 Gew.-%, insbesondere ungefähr 5 Gew.-% des gesamten PTFE in der Deckschicht ausmacht.

5. Antihaftbeschichtung nach einem der Ansprüche 1 bis 4, **dadurch gekennzeichnet, dass** das hochmolekulare modifizierte PTFE eine mittlere Teilchengrösse von 15 bis 35 $\mu$m, insbesondere ungefähr 25 $\mu$m, besitzt.

6. Antihaftbeschichtung nach einem der Ansprüche 1 bis 5, **dadurch gekennzeichnet, dass** die Deckschicht frei von Acrylaten ist.

7. Antihaftbeschichtung nach einem der Ansprüche 1 bis 6, **dadurch gekennzeichnet, dass** die Haftvermittlerschicht im Wesentlichen aus hochtemperaturbeständigen Bindeharzen, Fluorpolymeren, Pigmenten und Füllstoffen besteht.

8. Antihaftbeschichtung nach Anspruch 7, **dadurch gekennzeichnet, dass** die Bindeharze aus der aus PES (Polyethersulfonen) und PAI (Polyamidimiden) bestehenden Gruppe ausgewählt sind.

9. Antihaftbeschichtung nach einem der Ansprüche 1 bis 8, **dadurch gekennzeichnet, dass** die Haftvermittlerschicht eine Trockenfilmschichtdicke von 10 bis 12 μm aufweist.

10. Verwendung einer Antihaftbeschichtung nach einem der Ansprüche 1 bis 9 für Oberflächenanwendungen, bei denen hohe Abriebfestigkeiten und gute Antihafteigenschaften gefordert werden.

11. Artikel, insbesondere Kochgeschirr oder anderer Haushalts- und Gebrauchsgegenstand, mit einer Oberfläche, welche mit einer Antihaftbeschichtung nach einem der Ansprüche 1 bis 9 versehen ist.

12. Verfahren zum Aufbringen einer Antihaftbeschichtung nach einem der Ansprüche 1 bis 9, **dadurch gekennzeichnet, dass** die zu bildende Haftvermittlerschicht in flüssiger Form als wässrige Dispersion auf die Oberfläche des Gegenstandes aufgebracht und anschliessend für 5 bis 15 Minuten bei 60 bis 110 °C getrocknet wird, und dass anschliessend die Deckschicht in Form einer wässrigen Dispersion auf die vorgetrocknete Haftvermittlerschicht aufgebracht wird und die Schichten durch anschliessende Trocknung und Versinterung bzw. Aufschmelzen bei 410 bis 430 °C miteinander und mit der Oberfläche des Gegenstandes verbunden werden.

**Claims**

1. A non-stick coating for an article, wherein the non-stick coating comprises at least one adhesion promoter layer (V) arranged on a surface of the article and a cover layer (D) arranged above the adhesion promoter layer, wherein the adhesion promoter layer has a dry film thickness of 5 to 25 μm, and wherein the cover layer has a dry film thickness of 20 to 45 μm, **characterized in that** the cover layer contains 98 to 100 wt.-% PTFE, and optionally up to 2 wt.-%, related to the total solid material content of the cover layer, of pigments and that it is free of melt-processible fluoropolymers, and that it contains, in addition to the high molecular weight PTFE, which was obtained by emulsion polymerization of TFE, 1 to 9 wt.-% of a high molecular weight modified PTFE, which contains < 1 wt.-% of perfluorpropylvinyl ether (PPVE) as a modifying comonomer and was obtained by suspension polymerization.

2. The non-stick coating according to claim 1, **characterized in that** the cover layer has a dry film thickness of 30 to 42 μm.

3. The non-stick coating according to claim 1 or 2, **characterized in that** the content of PTFE in the cover layer is 99 to 99.5 wt.-%.

4. The non-stick coating according to one of claims 1 to 3, **characterized in that** the the proportion of the high molecular weight modified PTFE in the cover layer is 4 to 6 wt.-%, particularly about 5 wt.-%, of the total PTFE in the cover layer.

5. The non-stick coating according to one of claims 1 to 4, **characterized in that** the high molecular weight modified PTFE has an average particle size of 15 to 35 μm, particularly about 25 μm.

6. The non-stick coating according to one of claims 1 to 5, **characterized in that** the cover layer is free of acrylates.

7. The non-stick coating according to one of claims 1 to 6, **characterized in that** the adhesion promoter layer consists substantially of high temperature resistant binder resins, fluoropolymers, pigments and fillers.

8. The non-stick coating according to claim 7, **characterized in that** the binder resins are selected from the group consisting of PES (polyethersulfones) and PAI (polyamide-imides).

9. The non-stick coating according to one of claims 1 to 8, **characterized in that** the adhesion promoter layer has a dry film thickness of 10 to 12 μm.

10. Use of a non-stick coating according to one of claims 1 to 9 for surface applications in which a high abrasion resistance and good non-stick properties are required.

11. An article, particularly a cookware or other household and utility article, having a surface provided with a non-stick coating according to one of claims 1 to 9.

12. A method for applying a non-stick coating according to one of claims 1 to 9, **characterized in that** the adhesive layer to be formed is applied on the surface of the article in liquid form as an aqueous dispersion and then dried for

EP 3 357 587 B1

5 to 15 minutes at 60 to 110°C, and that subsequently the cover layer is applied in the form of an aqueous dispersion on the pre-dried adhesive layer, and that the layers are connected to each other and with the surface of the article by subsequent drying and sintering or melting at 410 to 430°C.

**Revendications**

1. Revêtement antiadhésif pour un objet, ce revêtement antiadhésif comportant au moins une couche d'agent adhésif (V) appliquée à la surface de l'objet et une couche de revêtement (D) au-dessus de la couche d'agent adhésif, la couche d'agent adhésif ayant une épaisseur de couche de film sec de 5-25 $\mu$m et la couche de revêtement ayant une épaisseur de couche de film sec de 20-45 $\mu$m,
revêtement **caractérisé en ce que**
la couche de revêtement contient entre 98 et 100 % massique de PTFE et le cas échéant jusqu'à 2% massique de pigments par rapport à la teneur totale en matières solides de la couche de revêtement et sans comporter de fluoro-polymères travaillés fondus, et
à côté de PTFE à poids moléculaire élevé obtenu par polymérisation en émulsion de TFE, 1-9 % massique d'un PTFE modifié, à poids moléculaire élevé qui contient moins de 1% massique de perfluoropropylvinyléther (PPVE), comme copolymère modifiant et obtenu par polymérisation en suspension.

2. Revêtement antiadhésif selon la revendication 1,
**caractérisé en ce que**
la couche de revêtement a une épaisseur de couche de film sec de 30-42 $\mu$m.

3. Revêtement antiadhésif selon la revendication 1 ou 2,
**caractérisé en ce que**
la teneur en PTFE dans la couche de revêtement est comprise entre 99 et 99,5 % massique.

4. Revêtement adhésif selon la revendication 1 à 3,
**caractérisé en ce que**
la teneur en PTFE modifié à poids moléculaire élevé, dans la couche de revêtement correspond à 4-6 % massique, notamment à environ 5% massique de PTFE total dans la couche de revêtement.

5. Revêtement adhésif selon l'une des revendications 1 à 4,
**caractérisé en ce que**
le PTFE modifié à poids moléculaire élevé, a une taille moyenne de particules comprise entre 15 et 35 $\mu$m, notamment environ de 25 $\mu$m.

6. Revêtement adhésif selon l'une des revendications 1 à 5,
**caractérisé en ce que**
la couche de revêtement ne contient pas d'acrylates.

7. Revêtement adhésif selon l'une des revendications 1 à 6,
**caractérisé en ce que**
la couche d'agent adhésif est composée principalement de résine de liant résistant aux températures élevées, de fluoropolymères, de pigments et d'une charge.

8. Revêtement adhésif selon la revendication 7,
**caractérisé en ce que**
les résines de liant sont choisies parmi PSE (polyéthersulfone) et PAI (polyamide-imide).

9. Revêtement selon l'une des revendications 1 à 8,
**caractérisé en ce que**
la couche d'agent adhésif a une épaisseur de couche en film sec comprise entre 10-12 $\mu$m.

10. Application de revêtement antiadhésif selon l'une des revendications 1 à 9, pour des applications en surface exigeant une forte résistance à l'abrasion et de bonnes propriétés antiadhésives.

11. Objet, notamment ustensile de cuisine ou autre ustensile ménager et d'usage courant ayant une surface avec un revêtement antiadhésif selon l'une des revendications 1 à 9.

12. Procédé d'application d'un revêtement antiadhésif selon l'une des revendications 1 à 9, **caractérisé en ce qu'** on applique la couche d'agent adhésif à former, à l'état liquide comme dispersion aqueuse sur la surface de l'objet puis on sèche pendant 5-15 minutes à 60-110°C et ensuite on applique la couche de revêtement sous la forme d'une dispersion aqueuse sur la couche d'agent adhésif préséchée et on relie entre elles les couches par séchage consécutif et frittage ou fusion à 410-430°C et on relie à la surface de l'objet.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5250356 A
- EP 1016466 A
- US 6761964 B
- EP 2001949 A
- EP 2342279 A
- WO 2012092414 A
- EP 0525660 A1
- EP 1614731 A1